# EUROPÄISCHE PATENTSCHRIFT

(11) **EP 2 614 110 B1**
(45) Veröffentlichungstag und Bekanntmachung des Hinweises auf die Patenterteilung: **19.10.2016**
(21) Anmeldenummer: 11752153.4
(22) Anmeldetag: 18.08.2011
(51) Int. Cl.: C08J 5/12, C08J 7/04, C08L 67/02, C08L 71/02, B32B 5/20, B32B 7/10, B32B 15/08, E04B 1/78, B29C 44/12, B32B 27/40

(54) **VERFAHREN ZUR HERSTELLUNG VON VERBUNDELEMENTEN AUF BASIS VON POLYURETHANSCHAUM**
PROCESS FOR THE MANUFACTURE OF COMPOSITE ELEMENTS BASED ON POLYURETHANE FOAM
PROCEDE DE FABRICATION DES ELEMENTS COMPOSITES A BASE DE MOUSSE DE POLYURETHANE

(30) Priorität: 09.09.2010 DE 102010040448
(43) Veröffentlichungstag der Anmeldung: 17.07.2013
(73) Patentinhaber: Evonik Degussa GmbH, 45128 Essen (DE)
(72) Erfinder: GLOS, Martin, 46325 Borken (DE); EILBRACHT, Christian, 44627Herne (DE)
(86) Internationale Anmeldenummer: PCT/EP2011/064205
(87) Internationale Veröffentlichungsnummer: WO 2012/031868

(56) Entgegenhaltungen:
- EP-A1- 0 585 636
- EP-A1- 2 286 989
- WO-A1-2009/089400
- WO-A2-2005/089480
- WO-A2-2009/047269
- WO-A2-2009/117630
- DE-A1-102004 022 677
- US-A- 5 472 988

## Beschreibung

Gegenstand der vorliegenden Erfindung ist eine Haftvermittler-Zusammensetzung nach Anspruch 1, ein Verfahren zur Herstellung von Verbundkörpern, hergestellt unter Verwendung dieser Zusammensetzungen sowie die entsprechenden Verbundkörper und deren Verwendung.

### Stand der Technik:

DE 20 2009 001 999 beschreibt Dämmplatten mit einem Polyurethankern, die als Deckschichten Polystyrolschichten aufweisen.

DE 10343902 beschreibt ein Verfahren zur Verbesserung der Haftung von PIR-Schaum (Polyisocyanurat-Schaum) auf Metalldeckschichten bei der Herstellung von Verbundelementen, wobei ein reaktiver Polyurethan-Haftvermittler verwendet wird. Der Haftvermittler besteht aus einem zweikomponentigen System und hat seine eigene Reaktionskinetik, die damit auf die Reaktionskinetik des PIR-Schaumes abgestimmt sein muss. Es werden mit über 100 g/m² relativ große Mengen des Haftvermittlers aufgetragen.

DE 102004022677 beschreibt eine Vorrichtung zur Herstellung von Verbundelementen mit einer Haftmittelauftragung über Drehteller wobei ein zweikomponentiger Haftvermittler auf Basis von Polyurethan verwendet wird. Hier müssen für den Haftvermittler zwei Komponenten dosiert werden. Dazu wird eine reaktive Isocyanat-haltige Mischung großflächig verteilt.

DE 10060078 beschreibt ein Verfahren zur Vermeidung von externen Haftvermittlern. Hier werden Organosilane dem Schaumsystem kurz vor der Verschäumung zugesetzt, da sie bei längerer Verweilzeit im System ihre Wirksamkeit zur Haftverbesserung verlieren würden.

US 4335218 beschreibt die Zugabe von dipolar aprotischen Lösungsmitteln zur Schaum-Mischung um eine bessere Haftung zu erhalten. Dies bedeutet einen Eingriff in das Schaumsystem, was sich in einer Verschlechterung der mechanischen Eigenschaften äußern kann.

In EP 0635527 werden PIR Schäume mit guten Haftungseigenschaften beschrieben, wobei halogenfreie Phosphorsäureester der Polyolmischung zugegeben werden. Auch hier wird in das Schaumsystem eingegriffen, was wiederum zu einer Verschlechterung der mechanischen Eigenschaften des Schaums führen kann.

WO 2010/072572 beschreibt die Verwendung von speziellen Polyesterpolyolen als Haftvermittler, die in die zu verschäumende Mischung eingebracht werden. Es werden hierbei Weichschäume, halbharte Schäume oder Integralschäume hergestellt. Auch hier wird in das Schaumsystem eingegriffen, was die Eigenschaften des Schaums verändern kann.

Aufgabe der vorliegenden Erfindung war die Bereitstellung eines Haftvermittlers, der nicht in das Schaumsystem eingreift, einfach anzuwenden ist und vorzugsweise einen oder mehrere der weiteren Nachteile der Haftvermittler des Standes der Technik vermeidet.

Überraschenderweise wurde gefunden, dass eine Zusammensetzung wie in den Ansprüchen beschrieben, die jeweils bezogen auf die Gesamtzusammensetzung 0,1 bis 15 Gew.-% mindestens einer Siloxanverbindung der Formel (I), 1 bis 7 Gew.-% mindestens eines Katalysators, der die Reaktion einer Isocyanatgruppe mit einer OH- oder NHR'-Gruppe katalysiert, 0 bis 50 Gew.-% mindestens einer Fettsäure oder eines Fettsäurederivats und 48,9 bis 98,9 Gew.-% mindestens einer speziellen Hydroxyverbindung der Formel (II), die mindestens eine OH-Gruppen aufweist, enthält, diese Aufgabe löst.

Gegenstand der vorliegenden Erfindung ist deshalb eine Haftvermittler-Zusammensetzung gemäß Anspruch 1.

Ebenfalls Gegenstand der vorliegenden Erfindung ist ein Verfahren zur Herstellung von Verbundkörpern, bei dem die erfindungsgemäße Zusammensetzung als Haftvermittler eingesetzt wird sowie ein entsprechend hergestellter Verbundkörper.

Außerdem ist Gegenstand der vorliegenden Erfindung die Verwendung der erfindungsgemäßen Verbundkörper als Isolier- oder Dämmplatten.

Die erfindungsgemäßen Zusammensetzungen haben den Vorteil, dass sie, wenn sie als Haftvermittler zwischen Polyurethanschaum und einer Deckschicht eingesetzt werden, die Bildung von Oberflächen-Defekten in der Schaumschicht (an der Grenzfläche zur Deckschicht) durch Kontaminationen auf den Deckschichten vermeidet oder zumindest verringert.

Ein weiterer Vorteil der erfindungsgemäßen Zusammensetzungen besteht darin, dass diese keine Verbindungen mit reaktiven Isocyanat-Funktionen enthalten und daher beim Herstellen des Verbundkörpers der Zeitraum zwischen dem Auftragen der Zusammensetzung und dem Aufbringen des Polyurethanschaums (also der Verschäumung) nahezu beliebig gewählt werden kann, ohne dass die Funktion als Haftvermittler beeinträchtigt wird.

Die Verwendung der erfindungsgemäßen Zusammensetzung als Haftvermittler hat den Vorteil, dass in das eigentliche Polyurethanschaumsystem nicht eingegriffen wird und somit alle bereits bekannten Polyurethanschäume zur Herstellung von Verbundkörpern eingesetzt werden können. Durch die Verwendung des erfindungsgemäßen Zusammensetzung können damit Verbundkörper hergestellt werden, die bezüglich der verwendeten Deckschicht und des verwendeten Polyurethanschaums nahezu beliebig kombiniert sein können, ohne dass Haftungsprobleme oder Probleme in der Schaumstruktur auftreten.

Ein weiterer Aspekt der Erfindung ist die Verbesserung der Schaumeigenschaften, speziell in den Randzonen, wo der Schaum in Kontakt mit den Deckschichten kommt. Generell treten in diesen Randzonen gehäuft Schaumfehler auf, wie zum Beispiel vergröberte Zellen oder Verdichtungen. Die Ursachen können verschiedenartig sein. Gründe für Schaumfehler können beispielsweise Kontaminationen bzw. Entschäumer aus den Lacken, bzw. Beschichtungen der Deckschichten sein. Durch die Verwendung der erfindungsgemäßen Zusammensetzungen, enthaltend Siloxane der Formel (I), können die Schaumeigenschaften in den Randzonen verbessert werden.

Oftmals werden die Deckschichten auch einer aufwändigen Vorbehandlung unterzogen bevor der PU-Schaum aufgebracht wird. So kommen beispielsweise Methoden wie Beflammung, Plasma-Behandlung oder Corona-Behandlung zum Einsatz. Durch Verwendung der erfindungsgemäßen Zusammensetzungen kann auf solche Vorbehandlungen verzichtet werden. In besonders schwierigen Fällen kann auch eine Kombination aus verschiedenen Vorbehandlungen sinnvoll sein. ("Beflammung und Haftvermittler").

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel.

Unter Polyurethanschaum (PU-Schaum) wird im Rahmen der vorliegenden Erfindung Schaum verstanden, der als Reaktionsprodukt basierend auf Isocyanaten und Polyolen erhalten wird. Es können hierbei neben dem, Namen gebenden, Polyurethan auch weitere funktionellen Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden.

Als Siloxanverbindung (Komponente a) werden solche der Formel (I) eingesetzt, bei denen der Rest R4 ein Polyetherrest der Formel (III) ist

-CH₂-CH₂-CH₂-O-(CH₂-CH₂O-)ₓ-(CH₂-CH(R1)O-)_{y}-R2 (III)

mit x, y, R1 und R2 wie im Anspruch 1 angegeben, wobei R2 vorzugsweise H oder Methyl ist.

Ganz besonders bevorzugt werden solche Siloxanverbindungen der Formel (I) eingesetzt, bei denen die Reste R5 dem Rest R4 entsprechen und b ungleich 0 ist und die Indizes c und d kleiner 1 sind, und im gegebenenfalls vorhandenen Rest R6 der Index b ebenfalls ungleich 0 ist, wobei alle Reste R4 der Formel (III) entsprechen.

Als Katalysatoren b) können in den erfindungsgemäßen Zusammensetzungen alle geeigneten Katalysatoren vorhanden sein, die die Reaktion einer Isocyanatgruppe mit einer OH- oder NHR'-Gruppe katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinkverbindungen bzw. -salze, Zinnverbindungen bzw. -salze, wie Dibutylzinndilaurat und Kaliumsalze, wie Kaliumacetat und Kalium-2-ethylhexanoat. Vorzugsweise enthält die erfindungsgemäße Zusammensetzung als Katalysator ein Zink-Salz oder eine Zinkverbindung oder ein Zinn-Salz oder eine Zinnverbindung, bevorzugt Zink-Ricinoleat oder Zinn-Ricinoleat.

Es kann vorteilhaft sein, wenn die erfindungsgemäße Zusammensetzung als Komponente c) als Fettsäurederivat einen Ester oder ein Amid einer Fettsäure aufweist. Besonders bevorzugte Ester sind solche, die durch Veresterung mit einem Monoalkohol, vorzugsweise mit einem Monoalkohol mit 1 bis 10, bevorzugt 2 bis 8 und besonders bevorzugt 3 bis 6 Kohlenstoffatomen erhalten werden. Als Amide können insbesondere solche eingesetzt werden, die durch Umsetzung der Fettsäure mit einem Alkoanolamin oder Dialkanolamin, bevorzugt Diethanolamin erhalten werden.

Bevorzugte Fettsäuren bzw. Fettsäurederivate sind solche, die auf von 10 bis 24, vorzugsweise von 12 bis 20 und bevorzugt von 14 bis 18 Kohlenstoffatomen aufweisenden Fettsäuren basieren. Bevorzugte Fettsäuren bzw. deren Derivate sind solche, die sich von Myristinsäure, Ölsäure oder Palmitinsäure ableiten.

Bevorzugte Fettsäuren bzw. Fettsäurederivate sind z. B. Isopropylmyristat, Ölsäurediethanolamid, Kokosfettsäuremonoethanolamid, Kokosfettsäuredimethylaminopropylamid, N,N',N'-Tris-(2-hydroxyethyl)-talkalkylpropylendiamin, 1-Aminoethyl-2-heptadecenylimidazolin, Cocosfettsäureamidopropyldimethylamin, Ethylhexylstearat, Capryl/Capric Triglycerid, PEG-7-Glyceryl Cocoat, Decyloleat, Isocetylpalmitat, PPG-3 Myristylether, Cetylricinoleat, PEG-400-Dicocoat, PEG-8-Ricinoleat.

Durch das Vorhandensein von Fettsäuren- bzw. Fettsäurederivaten kann die Viskosität der erfindungsgemäßen auf einfache Weise abgesenkt werden und ggf. ein positiver Effekt auf die Schaumqualität an der Grenzfläche erzielt werden.

Geeignete Verbindungen der Komponente d) sind z. B. Polyether, Polyetheramine, Polyetherpolyole, Glymes, endverkappte Polyether, Polyesterpolyole aus Haftharzen wie z. B. Dynapol^{®}-Typen, Polyalkylenglykole, Polyalkylenglykolamine, Polyacetale, Polycarbonate, Polyesterether, Polyestercarbonate, Polythioether, Polyamide, Polyesteramide etc. Die Polyole können nach den aus dem Stand der Technik bekannten Methoden hergestellt werden. Ein Überblick kann z.B. dem Römpp Chemielexikon, 2010 Georg Thieme Verlag und der Ullmann's Encyclopedia of Industrial Chemistry, Wiley-VCH Verlag GmbH & Co. KGaA, Weinheim, und den dort angegebenen Literaturstellen entnommen werden.

Die mit dem Index q bezeichneten Einheiten können in den einzelnen Verbindungen gleich oder unterschiedlich sein. Sind die mit dem Index q bezeichneten Einheiten unterschiedlich, können die unterschiedlichen Einheiten statistisch oder blockweise, vorzugsweise blockweise angeordnet sein.

Die Komponente d) weist vorzugsweise eine OH-Zahl, bestimmt gemäß der DGF-Methode C-V 17a (Deutsche Gesellschaft für Fettwissenschaft) von 5 bis 300 mg KOH/g, bevorzugt von 10 bis 150 mg KOH/g auf. Die OH-Zahl der erfindungsgemäßen Zusammensetzung beträgt vorzugsweise von 5 bis 300 mg KOH/g, bevorzugt von 10 bis 150 mg KOH/g.

Als Verbindungen der Komponente d) sind Hydroxyverbindungen, die mindestens eine OH-Gruppe aufweisen und bevorzugt ausgewählt sind aus Verbindungen der Formel (IIa)

R8[-O-(CH₂-CHR9-O)_{q}-H]ₛ (IIa)

mit
R8 Kohlenwasserstoffrest, der optional mit OH-Gruppen substituiert sein kann, oder Rest einer organischen Mono-, Di- oder Polysäure, der optional mit OH-Gruppen substituiert sein kann,
R9 wie oben definiert,
q gleich 3 bis 200 und
s größer-gleich 1, vorzugsweise 1, 2 oder 3, bevorzugt 1, enthalten.

Als Komponente d) weist die erfindungsgemäße Zusammensetzung vorzugsweise Verbindungen, insbesondere solche die der Formel (IIa) genügen, auf, die ein (gewichts-)mittleres Molekulargewicht von größer 400 g/mol, vorzugsweise von 500 bis 8000 g/mol und besonders bevorzugt von 600 bis 5000 g/mol aufweisen. Bevorzugte Verbindungen der Formel (IIa) sind solche, bei denen s gleich 1 bis 3, bevorzugt 1 ist und R8 ein Wasserstoff oder ein Kohlenwasserstoffrest, vorzugsweise ein Alkylrest, mit 1 bis 20, bevorzugt 2 bis 18 und besonders bevorzugt 3 bis 14 Kohlenstoffatomen.

Bevorzugte Verbindungen der Formel (IIa) sind solche der Formel (IIb)

R8[-O-(C₂H₄-O)ₘ-(C₃H₆-O)ₙ-H]ₛ (IIb)

mit R8 und s wie oben definiert, vorzugsweise mit s gleich 1 bis 3, bevorzugt 1 ist und R8 ein Wasserstoff oder ein Kohlenwasserstoffrest, vorzugsweise ein Alkylrest, mit 1 bis 20, bevorzugt 2 bis 18 und besonders bevorzugt 3 bis 14 Kohlenstoffatomen, und m = 0 bis 200 und n = 5 bis 250, wobei m und n vorzugsweise so gewählt werden, dass die oben genannten bevorzugten Molekulargewichte erhalten werden. Bevorzugt werden m und n so gewählt, dass der Gewichtsanteil der mit dem Index n bezeichneten Einheiten (Propylenoxid- bzw. PO-Einheiten) größer ist als der Gewichtsanteil der mit dem Index m bezeichneten Einheiten (Ethylenoxid- bzw. EO-Einheiten). Besonders bevorzugt beträgt der Anteil der PO-Einheiten größer-gleich 60, bevorzugt größer-gleich 70 bezogen auf die Summe aller mit den Indizes m und n (bzw. aller mit q) bezeichneten Einheiten. Besonders bevorzugt handelt es sich bei der Komponente d) ausschließlich um solche Verbindungen der Formel (IIa), bei der alle mit dem Index q bezeichneten Einheiten auf Propylenoxid basieren (PO-Einheiten).

Es kann vorteilhaft sein, wenn die erfindungsgemäße Zusammensetzung als Komponente d) eine Mischung von zwei oder mehr Verbindungen aufweist, die mindestens drei, vorzugsweise miteinander verbundene, Einheiten (q größer-gleich 3) der Formel (II) aufweisen. Bevorzugte Mischungen von solchen Verbindungen sind insbesondere solche, die mindestens ein Polyalkylenglykol und mindestens ein Polyetheramin aufweisen.

Die Komponenten d) der erfindungsgemäßen Zusammensetzungen und vorzugsweise auch die Komponenten c) weisen vorzugsweise eine Siedetemperatur bei Normaldruck von größer-gleich 150 °C, bevorzugt größer 150 °C und besonders bevorzugt größer 175 °C auf. Durch den Einsatz von Verbindungen mit hohen Siedetemperaturen kann bei der Verarbeitung der Zusammensetzung die Freisetzung von Dämpfen weitestgehend vermieden werden.

Besonders bevorzugte Zusammensetzungen sind nachfolgend aufgeführt und enthalten mindestens oder bestehen vorzugsweise aus:
Komponente a): Polyethermodifiziertes Siloxan, bevorzugt Tegostab^{®} B8443,
Komponente b): Zinkricinoleat, bevorzugt KOSMOS^{®} 54,
Komponente c): Isopropylmyristat und
Komponenten d): Polyalkylenglykol enthaltend EO und PO mit einer Funktionalität von 2, wobei der PO-Anteil in Bezug auf die Anteile an EO und PO mindestens 50 Mol-% beträgt;
oder
Komponente a): Polyethermodifiziertes Siloxan, bevorzugt Tegostab^{®} B8443,
Komponente b): Zinkricinoleat, bevorzugt KOSMOS^{®} 54,
Komponente c): Fettsäureamid, bevorzugt Ölsäurediethanolamid und
Komponenten d): Polyalkylenglykol enthaltend EO und PO mit einer Funktionalität von 2, wobei der PO-Anteil in Bezug auf die Anteile an EO und PO mindestens 50 Mol-% beträgt;
oder
Komponente a): Polyethermodifiziertes Siloxan, bevorzugt Tegostab^{®} B8443,
Komponente b): Zinkricinoleat
Komponente d): ein Fettalkohol-Alkoxylat basierend auf EO und PO, wobei der PO-Anteil in Bezug auf die Anteile an EO und PO mindestens 50 Mol-% beträgt und der Fettalkohol von 8 bis 22 Kohlenstoffatome enthält (vorzugsweise Ortegol 315), und größer 20 Massen-% an Polyalkylenglykol bezogen auf die Summe aus Fettalkohol-Alkoxylaten und Polyalkylenglykolen, wobei der Polyalkylenglykol basiert auf Startalkoholen mit weniger als 7 Kohlenstoffen, mit einer Funktionalität von 1 bis 2, wobei der PO-Anteil in Bezug auf die Anteile an Alkylenoxiden mindestens 60 Mol-% beträgt;
oder
Komponente a): Polyethermodifiziertes Siloxan, bevorzugt Tegostab^{®} B8460,
Komponente b): Zinkricinoleat, bevorzugt KOSMOS^{®} 54,
Komponenten d): Polyalkylenglykol enthaltend EO und PO mit einer Funktionalität von 2 wobei der PO-Anteil in Bezug auf die Anteile an EO und PO mindestens 70 Mol-% beträgt, und größer 20 Massen-% bezogen auf die Summe von Etheraminen und Polyakylenglykolen an Polyetheraminen, vorzugsweise Jeffamin T 5000 von Huntsman;
oder
Komponente a): Polyethermodifiziertes Siloxan, bevorzugt Tegostab^{®} B8443,
Komponente b): Zinkricinoleat, bevorzugt KOSMOS^{®} 54,
Komponente c): Fettsäureamid, bevorzugt Ölsäurediethanolamid und
Komponenten d): Polyalkylenglykol enthaltend EO und PO mit einer Funktionalität von 2, wobei der PO-Anteil in Bezug auf die Anteile an EO und PO mindestens 70 Mol-% beträgt, und größer 20 Massen-% bezogen auf die Summe von Etheraminen und Polyakylenglykolen an Polyetheraminen, vorzugsweise Jeffamin T 5000 oder Jeffamin D 2000 von Huntsman;
oder
Komponente a): Polyethermodifiziertes Siloxan,
Komponente b): Zinnricinoleat, bevorzugt KOSMOS^{®} EF,
Komponente c): Isopropylmyristat und
Komponenten d): Polyalkylenglykol mit einer Funktionalität von größer 2, wobei der PO-Anteil in Bezug auf die Anteile an Allkylenoxiden mindestens 60 Mol-% beträgt
oder
Komponente a): Polyethermodifiziertes Siloxan
Komponente b): Zinkricinoleat, bevorzugt KOSMOS^{®} 54,
Komponente c): Isopropylmyristat und
Komponenten d): Polyalkylenglykol enthaltend EO und PO mit einer Funktionalität von 2,2 bis 3,5 wobei der Anteil an primären OH-Gruppen mindestens 50 Mol-% beträgt;
wobei die Massenanteile der Komponenten den oben genannten Bereichen, insbesondere den oben als bevorzugt genannten Bereichen entsprechen.

Die Viskositäten der erfindungsgemäßen Zusammensetzungen können über einen großen Bereich eingestellt werden. Dadurch können sie nach unterschiedlichen Methoden auf die Deckschichten aufgebracht werden. Generell werden beim Versprühen niedrigere Viskositäten bevorzugt, während beim Auftrag mit Drehtellern, wie in DE 102004022677 beschrieben, oder bei einem Walzenauftrag die Viskosität höher sein kann. Die Viskosität der erfindungsgemäßen Zusammensetzungen liegen vorzugsweise im Bereich von 10 mPa·s bis 2000 mPa·s, bevorzugt von 20 mPa·s bis 1000 mPa·s besonders bevorzugt 30 mPa·s bis 800 mPa·s. Die Viskosität wurde, wenn in der Beschreibung der vorliegenden Erfindung nicht anders angegeben, nach DIN 53015 bei 20°C mit einem Kugelfallviskosimeter nach Höppler bestimmt.

Die erfindungsgemäße Zusammensetzung kann z. B. als Haftvermittler bei der Herstellung von Verbundkörpern eingesetzt werden.

Das erfindungsgemäße Verfahren zur Herstellung von Verbundkörpern, die einen Polyurethanschaum haftend auf einer Deckschicht aufweisen, zeichnen sich dadurch aus, dass die Deckschicht vor dem Aufbringen des Polyurethanschaums mit einer erfindungsgemäßen Zusammensetzung ausgerüstet wird. Prinzipiell kann die Herstellung der Verbundkörper angelehnt an die in DE 10 2004 022 677 A1 oder DE 103 43 902 A1 beschriebenen Verfahren erfolgen. Erfindungswesentlich ist aber, dass im vorliegenden Verfahren die (als Haftvermittler) verwendete Zusammensetzung auf die Deckschicht aufgebracht wird, bevor auf die Deckschicht, bzw. auf die mit der erfindungsgemäßen Zusammensetzung ausgerüstete Deckschicht der PU-Schaum aufgebracht wird.

Das Ausrüsten der Deckschicht mit der Zusammensetzung kann durch bekannte Maßnahmen, z. B. durch Aufsprühen, Aufrakeln, Aufziehen oder Aufstreichen der Zusammensetzung oder durch Tauchen der Deckschicht in die Zusammensetzung erfolgen.

Es kann vorteilhaft sein, wenn auf den Polyurethanschaum eine weitere Deckschicht haftend aufgebracht wird, die vor dem Aufbringen auf den Polyurethanschaum ebenfalls mit einer erfindungsgemäßen Zusammensetzung ausgerüstet wird.

Die Menge der eingesetzten Zusammensetzung kann beliebig gewählt werden. Vorzugsweise werden die Deckschichten mit einer Menge von 1 bis 200 g/m², bevorzugt 5 bis 100 g/m² an erfindungsgemäßer Zusammensetzung ausgerüstet.

Als Deckschichten können in dem erfindungsgemäßen Verfahren alle Arten von Deckschichten verwendet werden, die üblicherweise zur Herstellung von Verbundkörpern eingesetzt werden. Bevorzugt werden die Deckschichten ausgewählt aus Metall, insbesondere Aluminium oder Stahl, Bitumen, Papier, Mineral-Vliesstoff, Vliesstoffe enthaltend organische Fasern, Kunststoffplatten, Schaumstoffplatten, wie z.B. Polystyrolplatten bzw. bahnen, Kunststofffolien, Holzplatten oder Gemische oder Laminate davon. Als Kunststoff-Deckschichten können verschiedene Materialien verwendet werden wie Polyvinylchlorid (PVC), Acrylnitril-Butadien-Styrol (ABS), Polymethylmethacrylat (PMMA), Polycarbonat (PC), Pholyphenylenoxid (PPO), Aycrlnitril-Styrol-Acrylester (ASA), thermoplastisches Polyurethan (TPU), Polyethylen (PE), Polypropylen (PP). Besonders bevorzugte Deckschichten sind Deckschichten aus Metall.

Die als Deckschichten verwendeten Materialien können Lackierungen oder andere Beschichtungen auf ihren Oberflächen aufweisen. Bevorzugte Lackierungen oder Beschichtungen sind z. B. Coil Coatings auf Blechen basierend auf Polyester-Harzen.

Wird ein Verbundkörper hergestellt, der zwei Deckschichten mit einer dazwischen angeordneten PU-Schaum-Schicht aufweist, so können die verwendeten Deckschichten gleich oder unterschiedlich sein. Bevorzugte Verbundkörper weisen zwei Deckschichten aus dem gleichen Material auf.

Die Stärke (Dicke) der Deckschicht kann beliebig gewählt werden. Werden zwei Decksichten verwendet können die Deckschichten eine gleiche oder eine unterschiedliche Dicke aufweisen. Vorzugsweise ist die Dicke der Deckschichten gleich.

Vorzugsweise erfolgt die Herstellung der Verbundkörper in kontinuierlicher Produktion, wobei nach dem Verlassen der Verschäumungsmaschine die Verbundkörper auf die passende Länge zugeschnitten bzw. gesägt werden. Bei ungenügender Haftung kann es beim Zuschneiden zu Problemen kommen, da bei Verlassen der Verschäumungsmaschine die Aushärtung noch nicht vollständig ist. Die Verwendung der erfindungsgemäßen Zusammensetzung hat den Vorteil, dass hohe bzw. höhere Bandgeschwindigkeiten verwendet werden können, da die Zusammensetzung die Haftung der Schaumschicht auf der Deckschicht schneller garantiert und somit ein Schneiden/Sägen früher möglich ist.

Die Herstellung des PU-Schaums kann in an sich bekannter Weise erfolgen. Es kann sich hierbei um kontinuierliche oder diskontinuierliche Prozesse handeln, die sowohl mit hohem maschinellem Aufwand unter vollautomatisierten Bedingungen, als auch mit geringem maschinellem Aufwand ablaufen können. Geeignete PU-Schäume und deren Herstellung sind allgemein z. B. in Ullmann's Encyclopedia of Industrial Chemistry, Stichwort Polyurethanes, Published Online: 15 JAN 2005, DOI: 10.1002/14356007.a21_665.pub2, Wiley-VCH Verlag GmbH & Co. KGaA, Weinheim und in der dort zitierten Literatur beschrieben.

Vorzugsweise wird der PU-Schaum dadurch erzeugt, dass eine Mischung enthaltend zumindest einen Urethan- und/oder Isocyanurat-Katalysator, zumindest ein Treibmittel, zumindest eine Isocyanatkomponente und zumindest eine Polyolkomponente verschäumt wird.

Neben den genannten Komponenten kann die Mischung weitere Bestandteile aufweisen, wie z. B. optional (weitere) Treibmittel, optional Flammschutzmitteln und optional weitere Additive, wie z. B. Füllstoffe, Emulgatoren, Stabilisatoren, wie z. B. Si-haltige und nicht Si-haltige, insbesondere Si-haltige und nicht Si-haltige organische Stabilisatoren und Tenside, Viskositätsenker, Farbstoffe, Antioxidantien, UV-Stabilisatoren oder Antistatika.

Vorzugsweise ist der Index in der erfindungsgemäß zur Verschäumung verwendeten Mischung größer 100, vorzugsweise größer 120 bis 750, besonders bevorzugt größer 150 bis 450. Der Index beschreibt dabei das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Es kann vorteilhaft sein, wenn das Massenverhältnis von Polyolkomponente zu Isocyanatkomponente in der eingesetzten Mischung größer 1 beträgt. Dadurch kann im Schaum das Verhältnis von Urethan- und Isocyanurat-Gruppen in Richtung Isocyanurat-Bildung verschoben werden. Solche Polyisocyanurat- (PIR-)Schäume zeigen häufig ein besseres Brandverhalten als Polyurethan- (PUR-)Schäume.

Als Isocyanatkomponente können die üblichen zur Herstellung von Polyurethan- bzw. Polyisocyanurat-Hartschaumstoffen geeigneten Isocyanatverbindungen eingesetzt werden. Die Isocyanatkomponente kann eine oder mehrere unterschiedliche Isocyanatverbindungen enthalten. Bevorzugte Isocynatkomponenten sind solche, organischen Isocyanate, die zwei oder mehr Isocyanat-Funktionen aufweisen.

Geeignete Isocyanate im Sinne dieser Erfindung sind alle mehrfunktionalen organischen Isocyanate, wie beispielsweise alle Isomere des Diphenylmethandiisocyanats (MDI), insbesondere 4,4'-Diphenylmethandiisocyanat, Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4.

Als Polyolkomponenten können alle bekannten Polyolverbindungen in der Mischung enthalten sein. Vorzugsweise sind als Polyolkomponente organische Substanzen mit mehreren gegenüber Isocyanaten reaktiven Gruppen sowie deren Zubereitungen vorhanden. Bevorzugte Polyole sind alle zur Herstellung von Hartschaumstoffen üblicherweise verwendeten Polyetherpolyole und Polyesterpolyole geeignet. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen). Bevorzugt sind die eingesetzten Polyolverbindungen keine Verbindungen, die als Komponenten a) bis d) verwendet werden.

Als Polyolkomponente sind in der Mischung vorzugsweise, bevorzugt ausschließlich Polyesterpolyole vorhanden, die auf aromatischen Säuren oder aliphatischen Säuren mit weniger als 10 Kohlenstoffatomen, die vorzugsweise jeweils zwei oder mehr Säuregruppen aufweisen, basieren. Besonders bevorzugte aliphatische Polyesterpolyole sind solche, die auf Adipinsäure basieren.

Besonders bevorzugte aromatische Polyesterpolyole basieren auf Phthalsäure oder Terephthalsäure und werden unter anderem als Stepanpol® (von Stepan), Terol® (von Oxid), Terate® (von Invista) oder Isoexter® von Coim vermarktet.

Die in der Mischung vorhandene Polyolkomponente weist vorzugsweise eine OH-Zahl von größer 100 auf.

Vorzugsweise ist in der Mischung mindestens ein Treibmittel vorhanden, wobei das Massenverhältnis von Treibmittel zu Polyolkomponente vorzugsweise von 1 bis 30 zu 100, bevorzugt von 5 bis 25 zu 100 und besonders bevorzugt von 10 bis 20 zu 100 beträgt. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe, die auch C-C-Doppelbindungen enthalten können, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt 1,2-Dichlorethan. Besonders bevorzugt ist/sind das oder die Treibmittel ausgewählt aus Kohlenwasserstoffen mit 5 Kohlenstoffatomen und halogenierten Kohlenwasserstoffen.

Optional kann als Treibmittel zusätzlich oder an Stelle der oben genannten Treibmittel Wasser eingesetzt werden. In der Mischung beträgt das Massenverhältnis von Wasser zu Polyolkomponente vorzugsweise kleiner 5 zu 100, bevorzugt kleiner 1 zu 100 und besonders bevorzugt kleiner 0,5 zu 100. Bevorzugt wird kein Wasser als Treibmittel eingesetzt bzw. ist kein Wasser in der Mischung vorhanden.

Das Wasser kann der Mischung direkt zugegebene werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können in der Mischung solche vorhanden sein, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinkverbindungen bzw. -salze, Zinnverbindungen bzw. -salze, wie Dibutylzinndilaurat und Kaliumsalze wie Kaliumacetat und Kalium-2-ethylhexanoat.

Geeignete Einsatzmengen richten sich nach dem Typ des Katalysators und liegen üblicherweise im Bereich von 0,05 bis 5 pphp (= Gewichtsteilen bezogen auf 100 Gewichtsteile Polyol) bzw. 0,1 bis 10 pphp für Kaliumsalze.

Als Flammschutzmittel können in der Mischung z. B. flüssige organische PhosphorVerbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor, oder halogenierte Verbindungen, beispielsweise halogenierte Polyole, sowie Feststoffe, wie Blähgraphit und Melamin, vorhanden sein.

Der Anteil an Flammschutzmittel an der Mischung beträgt vorzugsweise 0 bis 50 Massenteile, bevorzugt 0,1 bis 20 Massenteile und besonders bevorzugt 1 bis 10 Massenteile bezogen auf 100 Massenteile Polyol.

Eine typische Polyurethan- bzw. Polyisocyanurat-Hartschaumformulierung im Sinne dieser Erfindung würde ein Raumgewicht von 20 bis 90 kg/m³ ergeben und hätte die folgende Zusammensetzung:

| | |
|---|---|
| Komponente | Gewichtsanteil |
| Polyol | 100 |
| (Amin-)Katalysator | 0,05 bis 5 |
| Kalium-Trimerisierungskatalysator | 0 bis 10 |
| Stabilisator | 0,5 bis 2,5 |
| Wasser | 0,01 bis <5, vorzugsweise 0,1 bis 2,5 |
| Treibmittel | 0 bis 40 |
| Flammschutzmittel | 0 bis 50 |
| Isocyanat-Index: | größer 150 |

Die Verarbeitung der Mischungen zu Schaumstoffen kann beispielsweise im Handmischverfahren oder bevorzugt mit Hilfe von Hochdruck-Verschäumungsmaschinen erfolgen.

Die erfindungsgemäße Produktion der Verbundkörper kann sowohl diskontinuierlich als auch kontinuierlich erfolgen. Vorzugsweise wird das erfindungsgemäße Verfahren im sogenannten Doppelband-Verfahren durchgeführt.

Typische Formulierungen benötigen eine Reaktionszeit die dem entsprechenden Verschäumungsprozess angepasst ist. Vorzugsweise werden bei kontinuierlichen Verschäumungen am Ende der Doppelband-Laminatoren die Platten auf die gewünschte Länge zugeschnitten. Dies kann je nach Bandgeschwindigkeit eine Aushärtezeit von 1 bis 10 Minuten ergeben. In diskontinuierlichen Prozessen können auch längere Aushärtezeiten mit bis zu 30 Minuten toleriert werden.

Die Reaktivität einer Formulierung kann unter anderem durch die Klebfreizeit beschrieben werden. Diese gibt an nach welcher Zeit der Schaum beim Berühren der Oberfläche nicht mehr kleben bleibt. Die Klebfreizeit nach dem Verschäumen von im erfindungsgemäßen Verfahren eingesetzten Mischungen zu Polyurethan- oder Polyisocyanurat-Hartschaumstoffen beträgt vorzugsweise kleiner 10 Minuten, bevorzugt kleiner 5 Minuten.

Als PU-Schaum wird vorzugsweise ein Polyisocyanuratschaum eingesetzt bzw. erzeugt.

Mit dem erfindungsgemäßen Verfahren bzw. durch die Verwendung der erfindungsgemäßen Zusammensetzung sind erfindungsgemäßen Verbundkörper zugänglich. Diese zeichnen sich dadurch aus, dass sie erhältlich sind durch Aufbringen eines Polyurethanschaums auf eine Deckschicht, die vorab mit einer erfindungsgemäßen Zusammensetzung ausgerüstet wurde. Es kann vorteilhaft sein, wenn der erfindungsgemäße Verbundkörper eine weitere Deckschicht auf dem Polyurethanschaum aufweist, die vor dem Aufbringen auf den Polyurethanschaum ebenfalls mit einer erfindungsgemäßen Zusammensetzung ausgerüstet wurde. Als Deckschicht weist der erfindungsgemäße Verbundkörper vorzugsweise eine oder mehrere der oben beschriebenen Deckschichten auf. Als Polyurethanschaum(-schicht) weist der Verbundkörper vorzugsweise einen PIR-Schaum auf. Die Dicke der Polyurethanschaumschicht kann beliebig gewählt sein. Vorzugsweise beträgt die Dicke der Polyurethanschaumschicht von 1 bis 50 cm, bevorzugt von 2 bis 20 cm und besonders bevorzugt von 5 bis 10 cm auf.

Die erfindungsgemäßen Verbundkörper können z. B. als Isolier- oder Dämmplatten verwendet werden. Insbesondere Verbundkörper, die mit flexiblen Deckschichten (wie z.B. Aluminium beschichtetes Papier) ausgerüstet sind, können hervorragend zur Wärmedämmung beim Bau von Häusern und Gebäuden eingesetzt werden. Daneben können Verbundkörper, die einen (Hart-)Schaum-Kern und feste metallische Deckschichten (z.B. aus Stahlblech) aufweisen, als Konstruktionselemente ebenfalls im Bausektor verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Beispiel 1: Herstellung erfindungsgemäßer Zusammensetzungen

Es wurden verschiedene erfindungsgemäße Zusammensetzungen durch Mischen der entsprechenden Ausgangsstoffe hergestellt. Die Menge der für die jeweilige Zusammensetzung verwendeten Ausgangsstoffe können Tabelle 1 entnommen werden.

**Tabelle 1: Eingesetzte Ausgangsstoffe**

| | Massenanteile in den Zusammensetzungen | | | | | | | | | | | | | | | | | |
|---|---|---|---|---|---|---|---|---|---|---|---|---|---|---|---|---|---|---|
| | Polyole | | | | | | | Fettsäure-Derivate | | | | | Katalysa-toren | | Siloxane | | | |
| Bsp. | A | B | C | D | E | G | H | I | J | K | L | M | N | O | P | Q | R | S |
| 1.1 | 4 7 | | | | | | | 4 7 | | | | | 5 | | 1 | | | |
| 1.2 | 6 7 | 2 0 | | | | | | 7 | | | | | 5 | | 1 | | | |
| 1.3 | | 4 7 | | | | | | | | 4 7 | | | 5 | | 1 | | | |
| 1.4 | | 4 7 | 4 7 | | | | | | | | | | 5 | | 1 | | | |
| 1.5 | 7 4 | | | | | | | | 2 0 | | | | 5 | | 1 | | | |
| 1.6 | 4 7 | 4 7 | | | | | | | | | | | 5 | | 1 | | | |
| 1.7 | 9 4 | | | | | | | | | | | | 5 | | 1 | | | |
| 1.8 | | 2 0 | | 6 7 | | | | 7 | | | | | 5 | | 1 | | | |
| 1.9 | 8 4 | | | | | | | | | | | 1 0 | 5 | | 1 | | | |
| 1.10 | 8 4 | | | | | | | | | | 1 0 | 1 5 | 5 | | 1 | | | |
| 1.11 | 4 7 | | | | 4 7 | | | | | | | | 5 | | | | 1 | |
| 1.12 | | 8 9 | | | | | 5 | | | | | | | 5 | | | | 1 |
| 1.13 | | 2 7 | | | | 6 4 | | | | | | | | 7 | | | 2 | |

### Polyole

A: Polyalkylenglykol, Funktionalität = 2, bestehend aus EO und PO mit 70 Mol-% Anteil PO, Molmasse 2400, erhältlich bei der Evonik Goldschmidt GmbH
B: Butanol-gestartetes Polypropylenglykol mit Molmasse 700, erhältlich bei der Evonik Goldschmidt GmbH
C: Ortegol^{®} 315; (Fettalkohol mit EO/PO alkoxyliert) der Evonik Goldschmidt GmbH
D: Hyperlite^{®} 1629, Polyetherpolyol von Bayer MaterialScience
E JEFFAMIN T 5000, Polyetheramin von Huntsman
G Voranol 3322: Polyetherpolyol von Dow
H Dynapol-LS 615 Polyesterpolyol von Evonik Degussa

### Fettsäure-Derivate:

I: (Tegosoft^{®} M) Isopropylmyristat, der Evonik Goldschmidt GmbH
J: (Rewomid^{®} DC 212 S) Olsäuredietanolamid, der Evonik Goldschmidt GmbH
K: (Tegosoft^{®} Cl) Cetearyl Isononanoat, der Evonik Goldschmidt GmbH
L Rewopon^{®} IM AN , Fettsäure-basierendes Imidazolin von Evonik Goldschmidt
M Genamin TCL 030, N-Talkalkylpropylendiamin-Ethoxylat von Clariant

### Katalysatoren:

N: (Kosmos^{®} 54) Zink-Ricinoleat, in Polyglykolen, der Evonik Goldschmidt GmbH
O: (Kosmos^{®} EF) Zinn-Ricinoleat, der Evonik Goldschmidt GmbH

### Siloxane:

P: (TEGOSTAB^{®} B 8443) Polyether-modifiziertes Siloxan der Evonik Goldschmidt GmbH
Q: (TEGOSTAB^{®} B 8485) Polyether-modifiziertes Siloxan der Evonik Goldschmidt GmbH
R: (TEGOSTAB^{®} B 8460) Polyether-modifiziertes Siloxan der Evonik Goldschmidt GmbH
S: (TEGOSTAB^{®} B 8486) Polyether-modifiziertes Siloxan der Evonik Goldschmidt GmbH

### Beispiel 2:

Zur Herstellung der zu untersuchenden Paneele wurden die nachfolgenden Schaumformulierungen 2a, 2b und 2c verwendet.

**Formulierung 2a:**

| Komponente | Gewichtsanteil |
|---|---|
| Stepanpol PS 2352 | 100 |
| TEGOAMIN 41 | 0,6 |
| PMDETA | 0,5 |
| KOSMOS 75 MEG | 2,5 |
| TEGOSTAB B 8465 | 2,0 |
| Wasser | 0,5 |
| cyclo-Pentan | 20 |
| TCEP | 11,8 |
| Desmodur 44 V 20 | 210 |
| Isocyanat-Index: | 320 |

### Formtemperatur 60°C, Entformzeit 10 Minuten

**Formulierung 2b:**

| Komponente | Gewichtsanteil |
|---|---|
| Terate 2541 | 80 |
| Daltolac R 471 | 20 |
| TEGOAMIN PMDETA | 0,4 |
| KOSMOS 75 MEG | 1,8 |
| TEGOSTAB B 8549 | 2,0 |
| Wasser | 0,8 |
| n-Pentan | 10 |
| TCPP | 10 |
| Desmodur 44 V 70 | 240 |
| Isocyanat-Index: | 300 |

### Formtemperatur 60°C, Entformzeit 10 Minuten

**Formulierung 2c:**

| Komponente | Gewichtsanteil |
|---|---|
| Daltolac R 471 | 95 |
| TEGOAMIN DMCHA | 0,4 |
| Wasser | 2,5 |
| TEGOSTAB B 8465 | 1,4 |
| cyclo-Pentan | 12.4 |
| Desmodur 44 V 20 | 240 |
| Isocyanat-Index: | 130 |

### Formtemperatur 40°C, Entformzeit 10 Minuten

**Beschreibung der in den Formulierungen 2a bis 2c eingesetzten Stoffe:**
Stepanpol^{®} PS 2352 ist ein Poylesterpoylol der Fa. Stepan
Terate^{®} 2541 ist ein Poylesterpoylol der Fa. Invista
Daltolac^{®} R 471 (und Daltolac R 251) sind Poyletherpoylole der Fa. Huntsman
TEGOAMIN^{®} PMDETA: Katalysator basierend auf Pentamethyldiethyletriamin von Evonik Goldschmidt
TEGOAMIN^{®} DMCHA: Katalysator basierend auf Dimethylcylcohexylamin von Evonik Goldschmidt
KOSMOS^{®} 75 MEG: Kalium-basierender Katalysator von Evonik Goldschmidt
TEGOSTAB^{®} B 8549: Silicon-Stabilisator von Evonik Goldschmidt
TCEP: Tris (2-chloroethyl) phosphat von TCI Europe

TCPP: Tris (1,3-dichloro-2-propyl) phosphat, Fyrol^{®} PCF von ICL Industrial Products Desmodur^{®} 44 V 70 und Desmodur^{®} 44 V 20 sind Gemische von Diphenylmethan-4,4'-diisocyanat (MDI) mit Isomeren und höherfunktionellen Homologen von Bayer MaterialScience.

Die in Beispiel 1 hergestellten Zusammensetzungen wurden auf lackierte Bleche mit den Maßen 5x5 cm in Mengen von ca. 10 g/m² durch Besprühen der Bleche mit den Zusammensetzungen aufgetragen. Die so präparierten Bleche wurden in eine Panelform mit den Maßen 25x50x2,5 cm eingelegt und anschließend die Schaummischung eingetragen. Die Verschäumung wurde jeweils ca. 30 Minuten nach dem Auftragen der Zusammensetzung auf die Bleche vorgenommenen. Bei Vergleichsversuchen wurde dieser Zeitraum auf 10 Sekunden verkürzt bzw. auf 2 Stunden verlängert. Hierbei konnten keine Veränderung der Abzugskräfte festgestellt werden. Somit hat die Verwendung der erfindungsgemäßen Zusammensetzungen außerdem den Vorteil, dass das Auftragen der erfindungsgemäßen Zusammensetzungen auf die Deckschichten zeitlich nicht mit der Verschäumung zur Herstellung der Verbundkörper abgestimmt werden muss.

Nach dem Aushärten des Schaums für 1 bis 2 Stunden wurden die Bleche vom Schaum nach DIN 53292 in senkrechter Richtung abgezogen und die Abzugskräfte bzw. Zugfestigkeit gemessen.

Bei Vergleichsversuchen mit einer kürzeren Aushärtezeit von 30 Minuten und mit einer längeren Aushärtezeiten von 48 Stunden konnten keine Veränderung der Abzugskräfte festgestellt werden, daher wurde aus Gründen der Arbeitsorganisation bei den angegebenen Beispielen eine Aushärtezeit von 1 bis 2 Stunden gewählt. Es wird also mit den erfindungsgemäßen Zusammensetzungen bereits nach kurzer Aushärtezeit eine gute Haftung erreicht.

Zum Vergleich wurden auf dem gleichen Schaum auch unbehandelte Bleche platziert.

Neben der Kraftmessung wurden anschließend die Bruchstellen beurteilt und drei verschiedenen Arten des Bruchs festgelegt. G: Die Deckschicht trennt sich glatt vom Schaum, T: Es bleibt teilweise Schaum an der Deckschicht kleben, K: Die komplette Oberfläche des Blechs bzw. der Deckschicht ist mit anhaftendem Schaum belegt. Das heißt der Schaum ist auf der gesamten Fläche ausgerissen und damit die Adhäsion des Bleches größer als die Kohäsion des Schaums.

In Tabelle 2 sind die Ergebnisse zusammengefasst. Es sind die verwendeten Zusammensetzungen aus Tabelle 1, die verwendete Schaumformulierung, die gemessenen Abzugskräfte in N/mm² und die Art des Bruches genannt.

**Tabelle 2**

| Versuch | Zusammensetzung gemäß Bsp.: | Schaumformulierung | Haftung N/mm² | Bruch (G; T; K) |
|---|---|---|---|---|
| 2.1 | Keine | 2a | 0,095 | G |
| 2.2 | 1.1 | 2a | 0,116 | K |
| 2.3 | 1.5 | 2a | 0,112 | K |
| 2.4 | 1.6 | 2a | 0,119 | K |
| 2.5 | 1.7 | 2a | 0,123 | K |
| 2.6 | 1.8 | 2a | 0,139 | K |
| 2.7 | Keine | 2b | 0,131 | G |
| 2.8 | 1.1 | 2b | 0,248 | T |
| 2.9 | 1.2 | 2b | 0,225 | G |
| 2.10 | 1.3 | 2b | 0,230 | G |
| 2.11 | 1.4 | 2b | 0,170 | G |
| 2.12 | 1.5 | 2b | 0,212 | G |
| 2.13 | 1.6 | 2b | 0,178 | G |
| 2.14 | 1.7 | 2b | 0,185 | G |
| 2.15 | 1.8 | 2b | 0,188 | G |
| 2.16 | 1.9 | 2b | 0,153 | G |
| 2.17 | 1.10 | 2b | 0,211 | T |
| 2.18 | 1.11 | 2b | 0,202 | T |
| 2.19 | 1.12 | 2b | 0,183 | G |
| 2.20 | 1.13 | 2b | 0,167 | G |
| 2.21 | keine | 2c | 0,126 | G |
| 2.22 | 1.2 | 2c | 1,40 | T |
| 2.23 | 1.9 | 2c | 0,285 | K |
| 2.24 | 1.11 | 2c | 0,165 | K |

Beim Abziehen der vorbehandelten Bleche sind die benötigten Kräfte deutlich (+20%) höher als bei den unbehandelten Blechen.

In den meisten Fällen ist die Haftung so gut, dass der Schaum reißt, das heißt, dass die Adhäsion des Blechs stärker ist als die Kohäsion des Schaums und somit am abgezogenen Blech noch Schaum verbleibt.

### Beispiel 3:

Nach der oben in Beispiel 2 beschriebenen Methode wurden auch Versuche mit Polymethylmethacrylat (PMMA) als Deckschicht durchgeführt. Es wurden Plexiglas®-Platten (von Evonik Röhm GmbH) mit 4 mm Dicke verwendet.

In Tabelle 3 sind die Ergebnisse zusammengefasst. Es sind die verwendeten Zusammensetzungen aus Tabelle 1, die verwendete Schaumformulierung aus Beispiel 2, die gemessenen Abzugskräfte in N/mm² und die Art des Bruches genannt.

**Tabelle 3**

| Versuch | Zusammensetzung gemäß Bsp.: | Schaumformulierung | Haftung N/mm² | Bruch (G; T; K) |
|---|---|---|---|---|
| 3.1 | keine | 2b | 0,092 | G |
| 3.2 | 1.2 | 2b | 0,115 | G |
| 3.3 | 1.3 | 2b | 0,122 | T |
| 3.4 | 1.4 | 2b | 0,118 | T |
| 3.5 | 1.5 | 2b | 0,176 | T |
| 3.6 | 1.9 | 2b | 0,110 | G |
| 3.7 | 1.11 | 2b | 0,125 | T |
| 3.8 | keine | 2c | 0,097 | G |
| 3.9 | 1.1 | 2c | 0,132 | T |
| 3.10 | 1.8 | 2c | 0,128 | T |
| 3.11 | 1.9 | 2c | 0,121 | G |
| 3.12 | 1.11 | 2c | 0,189 | K |

Auch bei der Verwendung von PMMA-Deckschichten konnte gezeigt werden, dass die erfindungsgemäßen Zusammensetzung zu einer Verbesserung der Haftung auf dem Schaum führen.

## Patentansprüche

1. Haftvermittler-Zusammensetzung, die keine Verbindungen mit reaktiven Isocyanat-Funktionen enthält, enthaltend jeweils bezogen auf die Gesamtzusammensetzung:
a)0,1 bis 15 Gew.-% mindestens einer Siloxanverbindung der Formel (I) 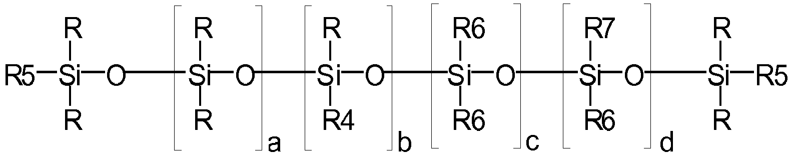 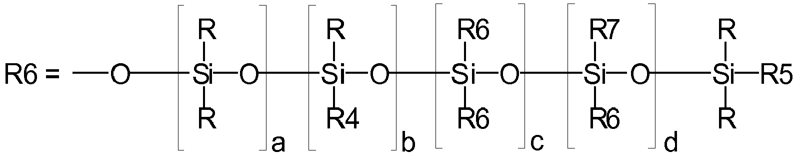 worin
a unabhängig voneinander 0 bis 500 ist,
b unabhängig voneinander > 0 bis 60 ist,
c unabhängig voneinander 0 bis 10, vorzugsweise 0 oder > 0 bis 5 und insbesondere 1, 2 oder 3 ist,
d unabhängig voneinander 0 bis 10, vorzugsweise 0 oder > 0 bis 5 und insbesondere 1, 2 oder 3 ist, mit der Maßgabe, dass in Formel (I) die mittlere Anzahl ∑d der T-Einheiten und die mittlere Anzahl ∑c der Q-Einheiten jeweils nicht größer als 50, die mittlere Anzahl ∑a der D-Einheiten nicht größer als 2000 und die mittlere Anzahl ∑b der R4 tragenden Siloxy-Einheiten nicht größer als 100 ist,
R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
R2 unabhängig voneinander ein Wasserstoffrest oder eine Alkylgruppe mit 1 bis 4 C-Atomen, eine Gruppe -C(O)-R' mit R' = Alkylrest, eine Gruppe -CH₂-O-R1, eine Alkylarylgruppe, wie z.B. eine Benzylgruppe, oder die Gruppe -C(O)NH-R1 bedeutet,
R7 unabhängig voneinander R, R4 und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste sein kann,
wobei als Siloxanverbindung (Komponente a) solche der Formel (I) eingesetzt werden, bei denen die Reste R5 dem Rest R4 entsprechen, welcher ein Polyetherrest der Formel (III) ist
-CH₂-CH₂-CH₂-O-(CH₂-CH₂O-)ₓ-(CH₂-CH(R1)O-)_{y}-R2 (III)
mit R1 = Methyl, R2 wie oben angegeben, wobei R2 vorzugsweise H oder Methyl ist, x = 0 bis 50, y = 0 bis 50 und die Summe x + y größer 3 ist,
b) 1 bis 7 Gew.-% mindestens eines Katalysators, der die Reaktion einer Isocyanatgruppe mit einer OH- oder NHR'-Gruppe katalysiert,
c) 0 bis 50 Gew.-% mindestens einer Fettsäure oder eines Fettsäurederivats und
d)48,9 bis 98,9 Gew.-% mindestens einer Komponente, die aus Verbindungen besteht, die jeweils mindestens drei Einheiten (q größer-gleich 3) der
Formel (II)
-(CH₂-CHR9-O)_{q}- (II)
aufweisen,
R9 gleich oder verschieden H oder Kohlenwasserstoffreste, die optional mit OH-Gruppen substituiert sein können,
wobei als Verbindungen der Formel (II) Hydroxyverbindungen vorhanden sind, die mindestens eine OH-Gruppe aufweisen und ausgewählt sind aus Verbindungen der Formel (IIa):
R8[-O-(CH₂-CHR9-O)_{q}-H]ₛ (IIₐ)
mit
R8 gleich Kohlenwasserstoffrest, der optional mit OH-Gruppen substituiert sein kann, oder Rest einer organischen Mono-, Di- oder Polysäure, der optional mit OH-Gruppen substituiert sein kann,
q gleich 3 bis 200 und
s größer-gleich 1.

2. Zusammensetzung nach Anspruch 1, **dadurch gekennzeichnet, dass** als Katalysator ein Zink-Salz oder eine Zinkverbindung enthalten ist.

3. Zusammensetzung nach einem der Ansprüche Anspruch 1 oder 2, **dadurch gekennzeichnet, dass** als Katalysator Zinkricinoleat enthalten ist.

4. Verfahren zur Herstellung von Verbundkörper, die einen Polyurethanschaum haftend auf einer Deckschicht aufweist, **dadurch gekennzeichnet, dass** die Deckschicht vor dem Aufbringen des Polyurethanschaums mit einer Zusammensetzung, die keine Verbindungen mit reaktiven Isocyanat-Funktionen enthält, ausgerüstet wird, welche enthält, jeweils bezogen auf die Gesamtzusammensetzung:
a) 0,1 bis 15 Gew.-% mindestens einer Siloxanverbindung der Formel (I) 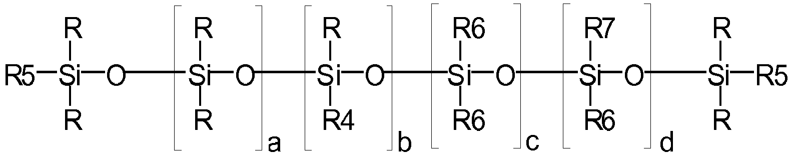 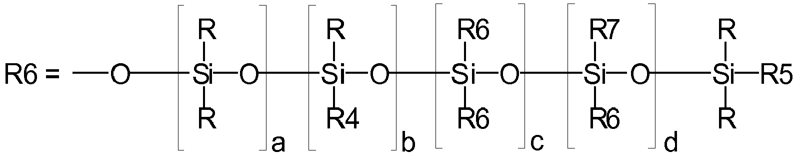 worin
a unabhängig voneinander 0 bis 500 ist,
b unabhängig voneinander >0 bis 60 ist,
c unabhängig voneinander 0 bis 10, vorzugsweise 0 oder > 0 bis 5 und insbesondere 1, 2 oder 3 ist,
d unabhängig voneinander 0 bis 10, vorzugsweise 0 oder > 0 bis 5 und insbesondere 1, 2 oder 3 ist, mit der Maßgabe, dass in Formel (I) die mittlere Anzahl ∑d der T-Einheiten und die mittlere Anzahl ∑c der Q-Einheiten jeweils nicht größer als 50, die mittlere Anzahl ∑a der D-Einheiten nicht größer als 2000 und die mittlere Anzahl ∑b der R4 tragenden Siloxy-Einheiten nicht größer als 100 ist,
R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
R2 unabhängig voneinander ein Wasserstoffrest oder eine Alkylgruppe mit 1 bis 4 C-Atomen, eine Gruppe -C(O)-R' mit R' = Alkylrest, eine Gruppe -CH₂-O-R1, eine Alkylarylgruppe, wie z.B. eine Benzylgruppe, oder die Gruppe -C(O)NH-R1 bedeutet,
R7 unabhängig voneinander R, R4 und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste sein kann,
wobei als Siloxanverbindung (Komponente a) solche der Formel (I) eingesetzt werden, bei denen die Reste R5 dem Rest R4 entsprechen, welcher ein Polyetherrest der Formel (III) ist
-CH₂-CH₂-CH₂-O-(CH₂-CH₂O-)ₓ-(CH₂-CH(R1)O-)_{y}-R2 (III)
mit R1 = Methyl, R2 wie oben angegeben, wobei R2 vorzugsweise H oder Methyl ist, x = 0 bis 50, y = 0 bis 50 und die Summe x + y größer 3 ist,
b) 1 bis 10 Gew.-% mindestens eines Katalysators, der die Reaktion einer Isocyanatgruppe mit einer OH- oder NHR'-Gruppe katalysiert,
c) 0 bis 50 Gew.-% mindestens einer Fettsäure oder eines Fettsäurederivats und
d)48,9 bis 98,9 Gew.-% mindestens einer Komponente, die aus Verbindungen besteht, die jeweils mindestens drei Einheiten (q größer-gleich 3) der
Formel (II)
-(CH₂-CHR9-O)_{q}- (II)
aufweisen,
R9 gleich oder verschieden H oder Kohlenwasserstoffreste, die optional mit OH-Gruppen substituiert sein können, wobei als Verbindungen der Formel (II) Hydroxyverbindungen vorhanden sind, die mindestens eine OH-Gruppe aufweisen und ausgewählt sind aus Verbindungen der Formel (IIa):
R8[-O-(CH₂-CHR9-O)_{q}-H]ₛ (IIa)
mit
R8 gleich Kohlenwasserstoffrest, der optional mit OH-Gruppen substituiert sein kann, oder Rest einer organischen Mono-, Di- oder Polysäure, der optional mit OH-Gruppen substituiert sein kann,
q gleich 3 bis 200 und
s größer-gleich 1.

5. Verfahren nach Anspruch 4, **dadurch gekennzeichnet, dass** das Ausrüsten der Deckschicht mit der Zusammensetzung durch Aufsprühen, Aufrakeln, Aufziehen oder Aufstreichen der Zusammensetzung oder durch Tauchen der Deckschicht in die Zusammensetzung erfolgt.

6. Verfahren gemäß Anspruch 4 oder 5, **dadurch gekennzeichnet, dass** auf den Polyurethanschaum eine weitere Deckschicht haftend aufgebracht wird, die vor dem Aufbringen auf den Polyurethanschaum ebenfalls mit einer Zusammensetzung gemäß einem der Ansprüche 1 bis 4 ausgerüstet wird.

7. Verfahren nach einem der Ansprüche 4 bis 6, **dadurch gekennzeichnet, dass** die Deckschicht mit einer Menge von 5 bis 25 g/m² an der Zusammensetzung ausgerüstet wird.

8. Verfahren nach einem der Ansprüche 4 bis 7, **dadurch gekennzeichnet, dass** die Deckschicht ausgewählt ist aus Metall, insbesondere Aluminium oder Stahl, Bitumen, Papier, Mineral-Vliesstoff, Vliesstoffe enthaltend organische Fasern, Kunststoffplatten, Schaumstoffplatten, Kunststofffolien, Holzplatten oder Gemische oder Laminate davon.

9. Verfahren nach einem der Ansprüche 4 bis 8, **dadurch gekennzeichnet, dass** als Polyurethanschaum ein Polyisocyanuratschaum eingesetzt wird.

10. Verbundkörper, erhältlich durch Aufbringen eines Polyurethanschaums auf eine Deckschicht, die vorab mit einer Zusammensetzung gemäß einem der Ansprüche 1 bis 3 ausgerüstet wurde.

11. Verbundkörper nach Anspruch 10, **dadurch gekennzeichnet, dass** er durch ein Verfahren gemäß einem der Ansprüche 4 bis 9 erhalten wird.

12. Verbundkörper gemäß Anspruch 10 oder 11, **dadurch gekennzeichnet, dass** er eine weitere Deckschicht auf dem Polyurethanschaum aufweist, die vor dem Aufbringen auf den Polyurethanschaum ebenfalls mit einer Zusammensetzung gemäß einem der Ansprüche 1 bis 4 ausgerüstet wurde.

13. Verwendung der Verbundkörper gemäß einem der Ansprüche 10 bis 12 als Isolier- oder Dämmplatten oder Konstruktionselemente.

## Claims

1. Adhesion-promoter composition that comprises no compounds having reactive isocyanate functions, comprising, based in each case on the entire composition:
a) from 0.1 to 15% by weight of at least one siloxane compound of the formula (I) 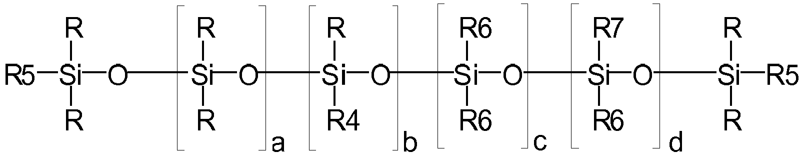 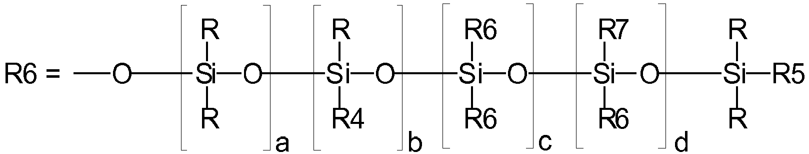 in which
a is mutually independently from 0 to 500,
b is mutually independently from > 0 to 60,
c is mutually independently from 0 to 10, preferably 0 or from > 0 to 5 and in particular 1, 2 or 3,
d is mutually independently from 0 to 10, preferably 0 or from > 0 to 5 and in particular 1, 2 or 3, with the proviso that, in formula (I), the average number ∑d of the T units and the average number ∑c of the Q units is in each case not greater than 50, the average number ∑a of the D units is not greater than 2000 and the average number ∑b of the R4-bearing siloxy units is not greater than 100,
R is mutually independently at least one moiety from the group of linear, cyclic or branched, aliphatic or aromatic, saturated or unsaturated hydrocarbon moieties having from 1 to 20 carbon atoms, but preferably is a methyl moiety,
R2 is mutually independently a hydrogen moiety or an alkyl group having from 1 to 4 carbon atoms, a -C(O)-R' group, where R' = alkyl moiety, a -CH₂-O-R1 group, an alkylaryl group, e.g. a benzyl group, or the -C(O)NH-R1 group,
R7 can be mutually independently R, R4 and/or a heteroatom-substituted, functionalized, organic, saturated or unsaturated moiety selected from the group of the alkyl, aryl, chloroalkyl, chloroaryl, fluoroalkyl, cyanoalkyl, acryloxyaryl, acryloxyalkyl, methacryloxyalkyl, methacryloxypropyl or vinyl moieties,
where those siloxane compounds (component a) of the formula (I) are used, in which the moieties R5 correspond to the moiety R4, which is a polyether moiety of the formula (III)
-CH₂-CH₂-CH₂-O-(CH₂-CH₂O-)ₓ-(CH₂-CH(R1)O-)_{y}-R2 (III)
Where R1 = methyl, R2 is as indicated above, where R2 is preferably H or methyl, X = from 0 to 50, y = from 0 to 50 and the sum x + y is greater than 3,
b) from 1 to 7% by weight of at least one catalyst which catalyses the reaction of an isocyanate group with an OH or NHR' group,
c) from 0 to 50% by weight of at least one fatty acid or one fatty acid derivative and
d) from 48.9 to 98.9% by weight of at least one component which is composed of compounds which in each case have at least three units (q greater than or equal to 3) of the formula (II)
-(CH₂-CHR9-O)_{q}- (II),
R9 are identical or different and are H or hydrocarbon moieties which optionally can have substitution by OH groups,
where
hydroxy compounds are present as compounds of the formula (II), which hydroxy compounds have at least one OH group and have been selected from compounds of the formula (IIa) :
R8 [-O-(CH₂-CHR9-O)_{q}-H]ₛ (IIa)
where
R8 is a hydrocarbon moiety which optionally can have substitution by OH groups, or a moiety which derives from an organic mono-, di- or polyacid and which optionally can have substitution by OH groups,
q is from 3 to 200 and
s is greater than or equal to 1.

2. Composition according to Claim 1, **characterized in that** a zinc salt or a zinc compound is present as catalyst.

3. Composition according to either of Claims 1 and 2, **characterized in that** zinc ricinoleate is present as catalyst.

4. Process for producing composites which comprise a polyurethane foam adhering on an outer layer, **characterized in that** the outer layer is equipped with a composition that comprises no compounds having reactive isocyanate functions, which comprises, based in each case on the entire composition:
a) from 0.1 to 15% by weight of at least one siloxane compound of the formula (I) 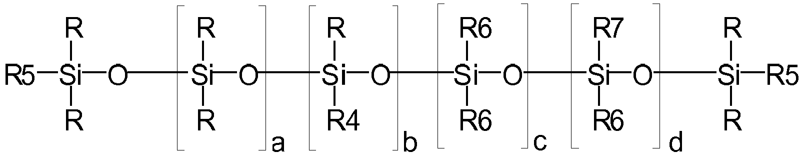 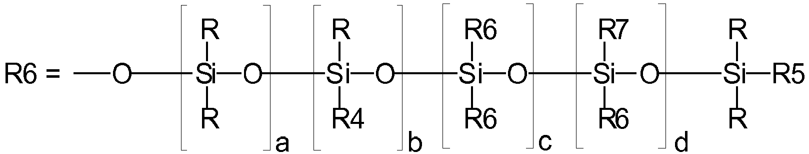 in which
a is mutually independently from 0 to 500,
b is mutually independently from > 0 to 60,
c is mutually independently from 0 to 10, preferably 0 or from > 0 to 5 and in particular 1, 2 or 3,
d is mutually independently from 0 to 10, preferably 0 or from > 0 to 5 and in particular 1, 2 or 3,
with the proviso that, in formula (I), the average number ∑d of the T units and the average number ∑c of the Q units is in each case not greater than 50, the average number ∑a of the D units is not greater than 2000 and the average number ∑b of the R4-bearing siloxy units is not greater than 100,
R is mutually independently at least one moiety from the group of linear, cyclic or branched, aliphatic or aromatic, saturated or unsaturated hydrocarbon moieties having from 1 to 20 carbon atoms, but preferably is a methyl moiety,
R2 is mutually independently a hydrogen moiety or an alkyl group having from 1 to 4 carbon atoms, a -C(O)-R' group, where R' = alkyl moiety, a -CH₂-O-R1 group, an alkylaryl group, e.g. a benzyl group, or the -C(O)NH-R1 group,
R7 can be mutually independently R, R4 and/or a heteroatom-substituted, functionalized, organic, saturated or unsaturated moiety selected from the group of the alkyl, aryl, chloroalkyl, chloroaryl, fluoroalkyl, cyanoalkyl, acryloxyaryl, acryloxyalkyl, methacryloxyalkyl, methacryloxypropyl or vinyl moieties,
where those siloxane compounds (component a) of the formula (I) are used, in which the moieties R5 correspond to the moiety R4, which is a polyether moiety of the formula (III)
-CH₂-CH₂-CH₂-O-(CH₂-CH₂O-)ₓ-(CH₂-CH(R1)O-)_{y}-R2 (III)
Where R1 = methyl, R2 is as indicated above, where R2 is preferably H or methyl, X = from 0 to 50, y = from 0 to 50 and the sum x + y is greater than 3,
b) from 1 to 10% by weight of at least one catalyst which catalyses the reaction of an isocyanate group with an OH or NHR' group,
c) from 0 to 50% by weight of at least one fatty acid or one fatty acid derivative and
d) from 48.9 to 98.9% by weight of at least one component which is composed of compounds which in each case have at least three units (q greater than or equal to 3) of the formula (II)
-(CH₂-CHR9-O)_{q}- (II),
R9 are identical or different and are H or hydrocarbon moieties which optionally can have substitution by OH groups,
where
hydroxy compounds are present as compounds of the formula (II), which hydroxy compounds have at least one OH group and have been selected from compounds of the formula (IIa) :
R8 [-O-(CH₂-CHR9-O)_{q}-H]ₛ (IIa)
where
R8 is a hydrocarbon moiety which optionally can have substitution by OH groups, or a moiety which derives from an organic mono-, di- or polyacid and which optionally can have substitution by OH groups,
q is from 3 to 200 and
s is greater than or equal to 1.

5. Process according to Claim 4, **characterized in that** outer layer is equipped with the composition by spray-application, doctor-application, draw-application or spread-application of the composition or dipping of the outer layer into the composition.

6. Process according to Claim 4 or 5, **characterized in that**, onto the polyurethane foam, a further outer layer is applied with adhesion, and this is likewise equipped with a composition according to any of Claims 1 to 4 before application to the polyurethane foam.

7. Process according to any of Claims 4 to 6, **characterized in that** the outer layer is equipped with an amount of from 5 to 25 g/m² of the composition.

8. Process according to any of Claims 4 to 7, **characterized in that** the outer layer is selected from metal, in particular aluminium or steel, bitumen, paper, mineral non-woven, non-wovens comprising organic fibres, plastics sheets, foam sheets, plastics films, timber sheets and mixtures and laminates thereof.

9. Process according to any of Claims 4 to 8, **characterized in that** a polyisocyanurate foam is used as polyurethane foam.

10. Composite, obtainable through application of a polyurethane foam to an outer layer which has been equipped in advance with a composition according to any of Claims 1 to 3.

11. Composite according to Claim 10, **characterized in that** it is obtained through a process according to any of Claims 4 to 9.

12. Composite according to Claim 10 or 11, **characterized in that** it has, on the polyurethane foam, a further outer layer which has likewise been equipped with a composition according to any of Claims 1 to 4 before application to the polyurethane foam.

13. Use of the composites according to any of Claims 10 to 12 as insulation sheets or structural elements.

## Revendications

1. Composition d'agent d'adhérence, qui ne contient pas de composés à fonctions isocyanate réactives, contenant chaque fois par rapport à la composition totale :
a) 0,1 à 15 % en poids d'au moins un composé siloxane de formule (I) 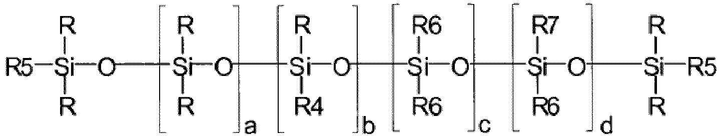 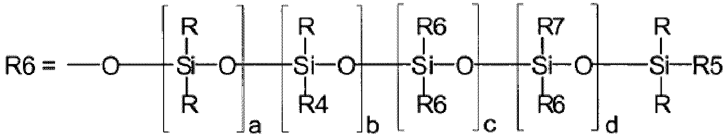 dans laquelle
a vaut chaque fois indépendamment 0 à 500,
b vaut chaque fois indépendamment > 0 à 60,
c vaut chaque fois indépendamment 0 à 10, de préférence 0 ou > 0 à 5 et en particulier 1, 2 ou 3,
d vaut chaque fois indépendamment 0 à 10, de préférence 0 ou > 0 à 5 et en particulier 1, 2 ou 3,
étant entendu que dans la formule (I) le nombre moyen ∑d des unités T et le nombre moyen ∑c des unités Q ne sont chacun pas supérieurs à 50, le nombre moyen ∑a des unités D n'est pas supérieur à 2 000 et le nombre moyen ∑b des unités siloxy portant R4 n'est pas supérieur à 100,
R est chaque fois indépendamment au moins un radical choisi dans le groupe des radicaux hydrocarbonés linéaires, cycliques ou ramifiés, aliphatiques ou aromatiques, saturés ou insaturés, ayant de 1 à 20 atomes de carbone, mais de préférence un radical méthyle,
R2 représente chaque fois indépendamment un atome d'hydrogène ou un groupe alkyle ayant de 1 à 4 atomes de carbone, un groupe -C(O)-R' où R' = radical alkyle, un groupe -CH₂-O-R1, un groupe alkylaryle, comme par exemple un groupe benzyle, ou le groupe -C(O)NH-R1,
R7 peut être chaque fois indépendamment R, R4 et/ou un radical organique, saturé ou insaturé, fonctionnalisé, substitué par des hétéroatomes, choisi dans le groupe des radicaux alkyle, aryle, chloralkyle, chloraryle, fluoroalkyle, cyano-alkyle, acryloxyaryle, acryloxyalkyle, méthacryloxyalkyle, méthacryloxypropyle ou vinyle,
comme composé siloxane (composant a) étant utilisés ceux de formule (I) dans lesquels les radicaux R5 correspondent au radical R4, qui est un radical polyéther de formule (III)
-CH₂-CH₂-CH₂-O-(CH₂-CH₂O-)ₓ-(CH₂-CH(R1)O-)_{y}-R2 (III)
où R1 = méthyle, R2 est tel qu'indiqué plus haut, R2 étant de préférence H ou le groupe méthyle, x = 0 à 50, y = 0 à 50 et la somme x + y est supérieure à 3,
b) 1 à 7 % en poids d'au moins un catalyseur qui catalyse la réaction d'un groupe isocyanate avec un groupe OH ou NHR',
c) 0 à 50 % en poids d'au moins un acide gras ou un dérivé d'acide gras et
d) 48,9 à 98,9 % en poids d'au moins un composant qui consiste en des composés qui comportent chacun au moins trois unités (q supérieur ou égal à 3) de formule (II)
-(CH₂-CHR9-O)_{q}- (II) ;
R9, identiques ou différents, représentant H ou des radicaux hydrocarbonés qui peuvent en option être substitués par des groupes OH,
comme composés de formule (II) étant présents des composés hydroxylés qui comportent au moins un groupe OH et sont choisis parmi des composés de formule (IIa) :
R8[-O-(CH₂-CHR9-O)_{q}-H]ₛ (IIa)
où
R8 représente un radical hydrocarboné qui peut en option être substitué par des groupes OH, ou le radical d'un monoacide, diacide ou polyacide organique, qui peut en option être substitué par des groupes OH,
g vaut de 3 à 200 et
s est égal ou supérieur à 1.

2. Composition selon la revendication 1, **caractérisée en ce qu'**en tant que catalyseur est contenu un sel de zinc ou un composé contenant du zinc.

3. Composition selon l'une quelconque des revendications 1 et 2, caractérisée en ce du ricinoléate de zinc est contenu en tant que catalyseur.

4. Procédé pour la production de corps composites qui comportent une mousse de polyuréthane adhérant à une couche de recouvrement, **caractérisé en ce que** la couche de recouvrement est munie, avant l'application de la mousse de polyuréthane, d'une composition qui ne contient pas de composés à fonctions isocyanate réactives, qui contient, chaque fois par rapport à la composition totale :
a) 0,1 à 15 % en poids d'au moins un composé siloxane de formule (I) 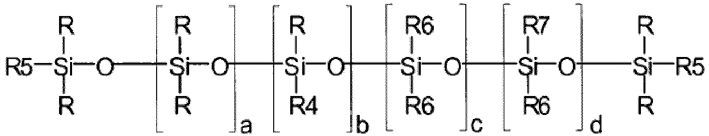 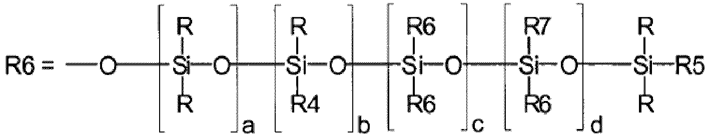 dans laquelle
a vaut chaque fois indépendamment 0 à 500,
b vaut chaque fois indépendamment > 0 à 60,
c vaut chaque fois indépendamment 0 à 10, de préférence 0 ou > 0 à 5 et en particulier 1, 2 ou 3,
d vaut chaque fois indépendamment 0 à 10, de préférence 0 ou > 0 à 5 et en particulier 1, 2 ou 3,
étant entendu que dans la formule (I) le nombre moyen ∑d des unités T et le nombre moyen ∑c des unités Q ne sont chacun pas supérieurs à 50, le nombre moyen ∑a des unités D n'est pas supérieur à 2 000 et le nombre moyen ∑b des unités siloxy portant R4 n'est pas supérieur à 100,
R est chaque fois indépendamment au moins un radical choisi dans le groupe des radicaux hydrocarbonés linéaires, cycliques ou ramifiés, aliphatiques ou aromatiques, saturés ou insaturés, ayant de 1 à 20 atomes de carbone, mais de préférence un radical méthyle,
R2 représente chaque fois indépendamment un atome d'hydrogène ou un groupe alkyle ayant de 1 à 4 atomes de carbone, un groupe -C(O)-R' où R' = radical alkyle, un groupe -CH₂-O-R1, un groupe alkylaryle, comme par exemple un groupe benzyle, ou le groupe -C(O)NH-R1,
R7 peut être chaque fois indépendamment R, R4 et/ou un radical organique, saturé ou insaturé, fonctionnalisé, substitué par des hétéroatomes, choisi dans le groupe des radicaux alkyle, aryle, chloralkyle, chloraryle, fluoroalkyle, cyano-alkyle, acryloxyaryle, acryloxyalkyle, méthacryloxyalkyle, méthacryloxypropyle ou vinyle,
comme composé siloxane (composant a) étant utilisés ceux de formule (I) dans lesquels les radicaux R5 correspondent au radical R4 qui est un radical polyéther de formule (III)
-CH₂-CH₂-CH₂-O-(CH₂-CH₂O-)ₓ-(CH₂-CH(R1)O-)_{y}-R2 (III)
où R1 = méthyle, R2 est tel qu'indiqué plus haut, R2 étant de préférence H ou le groupe méthyle, x = 0 à 50, y = 0 à 50 et la somme x + y est supérieure à 3,
b) 1 à 10 % en poids d'au moins un catalyseur qui catalyse la réaction d'un groupe isocyanate avec un groupe OH- ou NHR',
c) 0 à 50 % en poids d'au moins un acide gras ou un dérivé d'acide gras et
d) 48,9 à 98,9 % en poids d'au moins un composant qui consiste en des composés qui comportent chacun au moins trois unités (q supérieur ou égal à 3) de formule (II)
-(CH₂-CHR9-O)_{q}- (II) ;
R9, identiques ou différents, représentant H ou des radicaux hydrocarbonés qui peuvent en option être substitués par des groupes OH,
comme composés de formule (II) étant présents des composés hydroxylés qui comportent au moins un groupe OH et sont choisis parmi des composés de formule (IIa) :
R8[-O-(CH₂-CHR9-O)_{q}-H]ₛ (IIa)
où
R8 représente un radical hydrocarboné qui peut en option être substitué par des groupes OH, ou le radical d'un monoacide, diacide ou polyacide organique, qui peut en option être substitué par des groupes OH,
g vaut de 3 à 200 et
s est égal ou supérieur à 1.

5. Procédé selon la revendication 4, **caractérisé en ce que** la couche de recouvrement est munie de la composition par application par pulvérisation, application à la racle, application par absorption ou application à la brosse de la composition ou par immersion de la couche de recouvrement dans la composition.

6. Procédé selon la revendication 4 ou 5, **caractérisé en ce qu'**on applique en adhérence sur la mousse de polyuréthane une couche de recouvrement supplémentaire qui est également munie, avant l'application sur la mousse de polyuréthane, d'une composition selon l'une quelconque des revendications 1 à 4.

7. Procédé selon l'une quelconque des revendications 4 à 6, **caractérisé en ce qu'**on munit la couche de recouvrement d'une quantité de 5 à 25 g/m² de la composition.

8. Procédé selon l'une quelconque des revendications 4 à 7, **caractérisé en ce que** la couche de recouvrement est choisie parmi un métal, en particulier l'aluminium ou l'acier, le bitume, le papier, un non-tissé minéral, des non-tissés contenant des fibres organiques, des plaques de matière plastique, des plaques de mousse, des feuilles de matière plastique, des panneaux de bois ou des mélanges ou stratifiés de ceux-ci.

9. Procédé selon l'une quelconque des revendication 4 à 8, **caractérisé en ce qu'**on utilise comme mousse de polyuréthane une mousse de polyisocyanurate.

10. Corps composite, pouvant être obtenu par application d'une mousse de polyuréthane sur une couche de recouvrement qui a été préalablement munie d'une composition selon l'une quelconque des revendications 1 à 3.

11. Corps composite selon la revendication 10, **caractérisé en ce qu'**il est obtenu par un procédé selon l'une quelconque des revendications 4 à 9.

12. Corps composite selon la revendication 10 ou 11, **caractérisé en ce qu'**il comporte sur la mousse de polyuréthane une couche de recouvrement supplémentaire qui a été également munie, avant l'application sur la mousse de polyuréthane, d'une composition selon l'une quelconque des revendications 1 à 4.

13. Utilisation des corps composites selon l'une quelconque des revendications 10 à 12, en tant que panneaux isolants ou calorifuges ou éléments de construction.
